# FASCICULE DE BREVET EUROPEEN

(11) **EP 1 743 828 B1**
(45) Date de publication et mention de la délivrance du brevet: **17.09.2008**
(21) Numéro de dépôt: 06360029.0
(22) Date de dépôt: 07.07.2006
(51) Int. Cl.: B62D 53/00, B62D 13/02, B62B 3/00, B60P 1/64

(54) **Remorque pour train de convoyage et train de convoyage obtenu**
Anhänger für einen Lastzug und einen daraus hergestellten Lastzug
Trailer for a transport train and transport train thus obtained

(30) Priorité: 11.07.2005 FR 0507403
(43) Date de publication de la demande: 17.01.2007
(73) Titulaire: MANULINE S.A.S., 68800 Thann (FR)
(72) Inventeur: Schlienger, Serge, 67140 Barr (FR)
(74) Mandataire: Nithardt, Roland

(56) Documents cités:
- EP-A- 1 352 815
- FR-A- 1 273 488
- FR-A- 1 363 381
- US-A- 3 337 234
- US-A- 5 906 384

## Description

### Domaine technique :

La présente invention concerne une remorque pour train de convoyage de charges, cette remorque comportant un châssis roulant associé à au moins une structure portante destinée à transporter une charge, ledit châssis roulant comportant des moyens de roulement, des moyens d'attelage destinés à atteler ladite remorque à au moins une autre remorque ou à un véhicule tracteur dudit train de convoyage et des moyens de couplage agencés pour coupler ladite structure portante de manière amovible audit châssis roulant, cette structure portante comportant également des moyens de roulement propres de manière à pouvoir être déplacée par rapport audit châssis roulant.

La présente invention concerne également un train de convoyage comportant au moins un véhicule tracteur et une série de remorques attelées.

### Technique antérieure :

Le train de convoyage concerné par la présente invention est utilisé dans des zones de convoyage où l'approvisionnement et/ou le transit de charges est nécessaire comme par exemple dans les aéroports et/ou les gares pour assurer le transport des bagages et/ou de toute autre charge en transit, dans les usines de fabrication, de
transformation, de lignes de production pour assurer l'approvisionnement des postes de travail en matières premières, pièces et composants ainsi que l'évacuation des pièces ou sous-ensembles fabriqués et/ou assemblés vers d'autres postes de travail, etc. Ce type de train de convoyage permet de transporter les charges nues ou conditionnées en caisse, en container, sur palette ou sous toute autre forme équivalente, entre plusieurs zones, qui peuvent être des zones de déchargement, de stockage, de fabrication, de montage, d'assemblage, de chargement, etc. Le train de
convoyage peut suivre ou non une piste prédéfinie et peut circuler sur une trajectoire en boucle fermée le ramenant par exemple à son point de départ. Il peut également être programmé pour effectuer des parcours type et/ou être muni de capteurs de présence pour circuler en mode automatique et éviter les obstacles.

Les charges transportées n'ont pas nécessairement la même destination et sont
habituellement chargées et déchargées des remorques au moyen d'engins de manutention tels que des chariots élévateurs. Ceci impose la mise à disposition permanente d'un ou de plusieurs caristes dont la fonction est de livrer la charge à l'endroit voulu. Pour limiter la manutention des charges et simplifier la logistique, certaines remorques peuvent être dételées, ce qui permet de livrer directement la charge avec sa remorque à l'endroit voulu et ainsi d'économiser le déplacement d'un engin de manutention. Néanmoins, le fait de dételer la remorque demande un temps d'intervention relativement long et fastidieux qui génère des temps d'arrêt importants du train de convoyage. Pour permettre au train de convoyage de poursuivre son chemin, les remorques restantes doivent être ré-attelées. Cette intervention impose au
conducteur du train de convoyage d'effectuer des manoeuvres et demande également une intervention longue et fastidieuse.

Certaines solutions ont été imaginées pour essayer de résoudre une partie des inconvénients mentionnés ci-dessus. Notamment, la publication US-A-5 906 384 décrit une remorque pour train de convoyage, constituée d'un châssis formé d'un cadre porté par quatre roues et dont deux côtés adjacents sont pivotants pour ouvrir ce cadre et y introduire un plateau porte charge amovible lui aussi porté par quatre roues. Cette solution n'est pas optimale car elle ne supprime pas les opérations de dételage-attelage nécessaires pour ouvrir le cadre du châssis. De plus, le châssis étant porté par quatre roues ne peut pas suivre la piste d'une trajectoire donnée, les virages étant systématiquement coupés.

La publication EP-A-309 058 décrit une remorque pour train de convoyage dont le châssis en forme de U est porté par quatre roues pour recevoir un plateau porte charge amovible également porté par quatre roues. Cette solution permet de déplacer la charge sans dételer la remorque du train de convoyage mais présente les mêmes inconvénients que ceux mentionnés ci-dessus relatifs au suivi d'une trajectoire donnée.

La publication EP-A-1 352 815 apporte une solution satisfaisante en terme de déchargement de la charge sans dételer la remorque du train et de suivi de trajectoire du train. La remorque telle que décrite comporte en effet un châssis en U porté par un essieu central à deux roues apte à guider le plateau porte-charge porté par quatre roues folles. Toutefois, à partir d'une certaine vitesse, les remorques situées à la queue du train de convoyage ont tendance à quitter la trajectoire prédéfinie et à entraîner les autres remorques dans leur déplacement parasite dont l'amplitude du mouvement augmente pouvant causer des dommages dans l'environnement proche de cette trajectoire, en percutant par exemple des personnes, des machines et autres. Pour éviter ce risque, on limite le nombre de remorques de ce train de convoyage à deux voire trois, ce qui n'est pas satisfaisant.

La publication FR 1 363 381 décrit un chariot de manutention transformable en remorque. Il comporte à cet effet deux essieux pivotants reliés par une biellette articulée en diagonale pour les faire pivoter simultanément en sens contraire. Toutefois, cette remorque ne permet pas de déplacer la charge sans la dételer du train de convoyage.

### Exposé de l'invention:

Le but de la présente invention est de résoudre les inconvénients ci-dessus en proposant une remorque pour train de convoyage qui soit simple, économique et très flexible, pouvant livrer rapidement les charges à l'endroit voulu, sans avoir besoin de dételer la remorque, avec un minimum d'efforts et un temps d'arrêt relativement court pour le train de convoyage de manière à simplifier considérablement la logistique et offrir une plus grande souplesse d'organisation dans le convoyage des charges d'un endroit à un autre, tout en réduisant l'investissement en matériels de manutention. Le but est également de proposer un train de convoyage pouvant comporter un nombre de remorques non limité et suivre les traces d'une trajectoire donnée, même étroite, sans couper les virages et sans déport des dernières remorques.

Dans ce but, l'invention concerne une remorque telle que définie en préambule et caractérisée en ce que les moyens de roulement du châssis roulant comportent au moins trois roues réparties en deux essieux reliés entre eux par au moins un longeron, les moyens d'attelage étant couplés aux essieux et le longeron comportant les moyens de couplage, et en ce que les deux essieux sont montés mobiles en rotation autour de leur axe central par rapport audit longeron et sont couplés entre eux par une transmission mécanique agencée pour les faire tourner en sens inverse.

Dans ce but, l'invention concerne également un train de convoyage tel que défini en préambule, caractérisé en ce qu'il comporte des remorques telles que définies ci-dessus, les châssis roulants étant agencés pour rester attelés et les structures portantes étant agencées pour être couplées aux châssis roulants de manière amovible.

### Description sommaire des dessins :

La présente invention et ses avantages apparaîtront mieux dans la description suivante de plusieurs modes de réalisation donnés à titre d'exemple non limitatif, en référence aux dessins annexés, dans lesquels :
- la figure 1 représente un exemple de train de convoyage selon l'invention, formé de trois châssis roulants attelés, dont un châssis roulant tracte deux petites structures portantes côte à côte,
- la figure 2 est une vue de dessous du châssis roulant à câbles, du train de la figure 1,
- la figure 3 est une vue en perspective d'une remorque selon une première variante de réalisation, le châssis roulant à câbles étant agencé pour recevoir une grande structure portante,
- les figures 4 et 5 sont des vues en perspective d'un châssis roulant à câbles selon une deuxième et une troisième variantes de réalisation,
- la figure 6 est une vue en perspective d'un châssis roulant à biellettes dont la structure est sensiblement similaire à celle des figures 1 et 2,
- les figures 7A, 7B et 7C sont des vues de dessus du châssis roulant de la figure 6 respectivement en virage à gauche, en ligne droite et en virage à droite,
- les figures 8 et 9 sont des vues en perspective d'un châssis roulant à biellettes selon une deuxième et une troisième variantes de réalisation dont la structure est sensiblement similaire à celle des figures 4 et 5,
- la figure 10 est une vue d'un autre train de convoyage selon l'invention,
- la figure 11 est une vue en perspective d'une remorque du train de convoyage de la figure 10, et
- la figure 12 est une autre variante de remorque selon l'invention.

### Illustrations de l'invention :

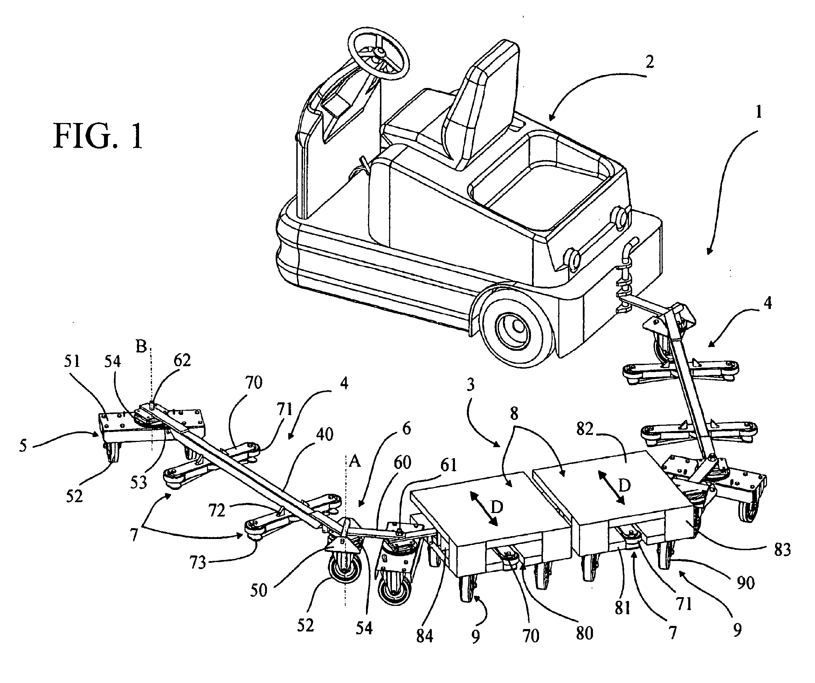

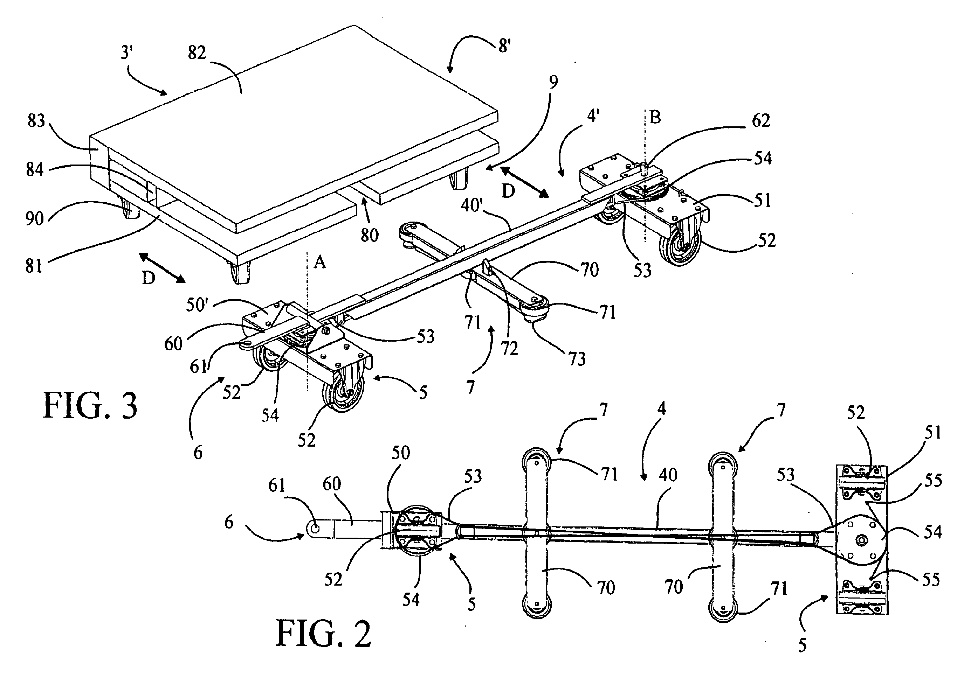

En référence aux figures 1 et 2, le train de convoyage 1 de la présente invention comporte un véhicule tracteur 2 auquel sont attelées des remorques 3 l'une derrière l'autre.

Chaque remorque 3 comporte un châssis roulant 4 associé, dans l'exemple illustré à la figure 1, à deux structures portantes 8 adaptées au transport de petites charges se présentant sous la forme de containers, de palettes, de caisses ou similaires, de petites dimensions et de poids limité. Chaque châssis roulant 4 comporte des moyens de roulement 5 aptes à suivre une trajectoire précise et des moyens d'attelage 6 aptes à atteler les remorques 3 entre elles et au véhicule tracteur 2. Il comporte également des moyens de couplage 7 aptes à coupler au moins une structure portante 8 au châssis roulant 4 et de manière amovible. La structure portante 8 comporte également des moyens de roulement 9 propres lui permettant d'être déplacée par rapport au châssis roulant 4.

### Meilleure manière de réaliser l'invention :

En référence également aux figures 1 et 2, les moyens de roulement 5 de chaque châssis roulant 4 comportent deux essieux 50, 51, l'un portant une roue 52 et l'autre deux roues 52 parallèles, reliés entre eux par un longeron 40. Ces roues 52 sont des roues fixes. Les deux essieux 50, 51 sont montés aux extrémités du longeron 40 de manière à être mobiles en rotation autour de leur axe A, B central et sont directement couplés aux moyens d'attelage 6. Ils sont également couplés entre eux au moyen d'une transmission mécanique agencée pour les faire tourner en sens inverse, par tout moyen adapté. Dans l'exemple illustré, cette transmission mécanique est constituée d'un câble 53 disposé en boucle fermée croisée autour de deux poulies 54 solidaires chacune d'un essieu 50, 51 (cf. fig. 2). Ce câble 53 peut être métallique et ses extrémités 55 peuvent être fixées à un des essieux 51 par des moyens de réglage (non représentés) sous la forme d'un système à vis ou similaire permettant d'ajuster le parallélisme entre les deux essieux 50, 51. Ainsi, lorsque le timon 60 tourne à gauche
ou à droite, entraîné par le véhicule tracteur 2 ou le châssis roulant 4 précédent, l'essieu 50 est pivoté autour de son axe de rotation A du même angle, tirant sur le câble 53 dans le même sens de rotation. La traction exercée sur le câble 53 par la poulie 54 se transmet à l'autre poulie 54 mais dans un sens de rotation inversé, les deux brins du câble 53 se croisant sous le longeron 40. L'essieu 51 est par conséquent pivoté en sens inversé du même angle que le timon 60. Les axes des roues 52 sont alors concourants en un point correspondant au centre du virage. Ces moyens de roulement 5 ont donc l'avantage de permettre aux roues 52 des châssis roulants 4 formant le train de convoyage 1 de suivre la même trajectoire, appelée mono trace, même lors de virages serrés.

Les moyens d'attelage 6 comportent, dans l'exemple illustré, d'un côté du châssis roulant 4, solidaire de l'essieu 50, un timon 60 terminé par un oeillet 61 et, de l'autre côté du châssis roulant 4, un pivot 62 solidaire et confondu avec l'axe de rotation B de l'essieu 51, apte à s'engager dans l' oeillet 61 du timon 60 du châssis roulant 4 suivant. Bien entendu, d'autres moyens d'attelage équivalents peuvent convenir comme par exemple une liaison à rotule, une liaison élastique ou similaire.

Dans l'exemple illustré, le longeron 40 a une forme rectiligne et est aligné avec les axes de rotation A, B des deux essieux 50, 51. Il peut être réalisé au moyen d'un profilé ou d'une tôle pliée métallique ou similaire et porte solidairement les moyens de couplage 7 permettant de recevoir la ou les structures portantes 8. Ces moyens de couplage 7 comportent deux traverses 70 disposées perpendiculairement et en croix par rapport au longeron 40, à des positions prédéfinies en fonction de la dimension des structures portantes 8 à tracter. Les structures portantes 8 comportent en correspondance de ces traverses 70, un logement transversal 80 apte à coulisser sur les traverses 70 formant ainsi des rails de guidage. Le déplacement des structures portantes 8 perpendiculairement au châssis roulant 4 est symbolisé par la flèche D. Pour faciliter ce coulissement, les traverses 70 comportent une surface de roulement formée par des galets 71 montés aux extrémités et au centre des traverses 70, libres en rotation autour de leur axe. Ces moyens de couplage 7 comportent également des moyens de verrouillage pour empêcher la sortie de la structure portante 8 lorsqu'elle est couplée au châssis roulant 4. Ces moyens de verrouillage comportent un doigt de verrouillage 72 monté sur chaque traverse 70 et agencé pour coopérer avec un évidement (non représenté) ménagé dans la structure portante 8. Ce doigt de verrouillage 72 est couplé d'une part à un organe de rappel (non représenté) apte à le solliciter en position verrouillée, et d'autre part à un organe de manoeuvre 73 tel qu'une pédale accessible par le pied de l'opérateur et agencé pour commander sa position déverrouillée. La position en croix des traverses 70 sur le longeron 40
permet de créer deux entrées, de part et d'autre du châssis roulant 4, pour recevoir les
structures portantes 8 indépendamment d'un côté ou de l'autre, ce qui permet une
grande souplesse d'utilisation. C'est la raison pour laquelle la construction des traverses 70 est symétrique par rapport au longeron 40.

La structure portante 8 telle que représentée dans la figure 1 a une forme sensiblement parallélépipédique et est constituée d'un plateau inférieur 81 et d'un plateau supérieur 82 parallèles entre eux et reliés par une paroi arrière 83 et un renfort longitudinal 84, définissant une ouverture latérale. Le plateau inférieur 81 porte les moyens de roulement 9 propres formés de quatre roulettes 90 folles et comporte le logement transversal 80 apte à coulisser sur les traverses 70 du châssis roulant 4. Une des roulettes 90 peut être couplée à un mécanisme de blocage pour la rendre directrice notamment lorsque la structure portante 8 n'est plus couplée au châssis roulant 4, dans le but de faciliter sa manutention. Le plateau supérieur 82 forme une plate-forme destinée à recevoir la charge sous la forme par exemple d'un container, d'une palette, d'une caisse, ou similaire. Cette structure portante 8 est par exemple réalisée en tôles métalliques pliées et soudées ou rivetées. Elle peut bien entendu être réalisée par tout autre moyen équivalent tel que des cadres en profilés, des panneaux en grillage métallique, une plate-forme en bois ou similaire. Elle peut également être équipée de moyens de retenue aptes à sécuriser la charge transportée, par exemple des arceaux et/ou des parois arrière et/ou latéraux, une barre avant de verrouillage, ainsi que des moyens de préhension aptes à faciliter le déplacement manuel de la structure portante 8 à vide et/ou chargée, par exemple un arceau ou une barre avant avec une poignée. Ces exemples ne sont pas limitatifs.

### Variantes de réalisation :

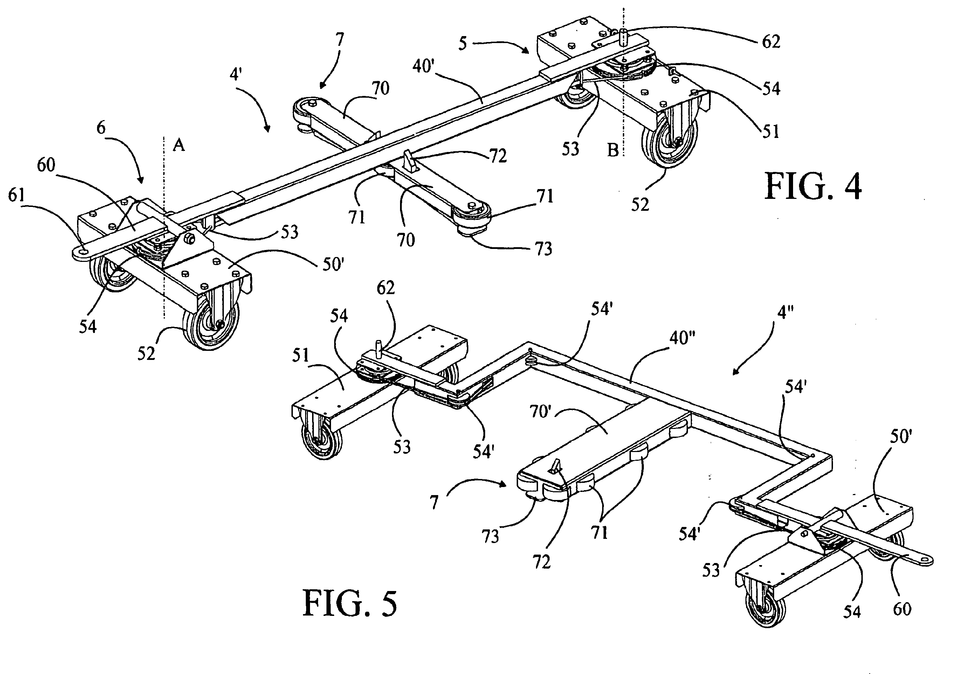

La figure 3 illustre une remorque 3' légèrement différente de la précédente. Le châssis roulant 4', également représenté seul à la figure 4, est porté par quatre roues 52 au lieu de trois, l'essieu 50' étant équivalent à l'essieu 51 et portant deux roues 52. De plus, les moyens de couplage 7 ne comportent qu'une traverse 70 disposée sensiblement au centre du longeron 40' pour recevoir une seule structure portante 8' plus grande que les structures portantes 8 pour le transport de charges plus volumineuses ou nécessitant une plate-forme plus grande. Les autres composants, qui restent les mêmes, portent les mêmes références et ne sont pas re-décrits.

La figure 5 illustre un autre type de châssis roulant 4" qui diffère des précédents par le fait que le longeron 40" a une forme en C, la grande branche du C étant décalée par rapport aux axes de rotation A, B des essieux 50', 51, délimitant une seule entrée pour recevoir une seule structure portante 8'. Dans cette variante, les moyens de couplage 7 comporte une traverse 70' disposée sensiblement au centre de la grande branche du C, ayant une largeur supérieure aux traverses 70 précédentes et comportant huit galets 71 répartis en périphérie pour former la surface de roulement nécessaire au coulissement d'une structure portante 8'. Dans cette variante, la transmission mécanique à câble 53 et à poulies 54 comporte des poulies de détour 54' disposées dans les angles des branches de C pour guider le câble 53 afin qu'il suive un trajet sensiblement confondu avec la forme en C du longeron 40".

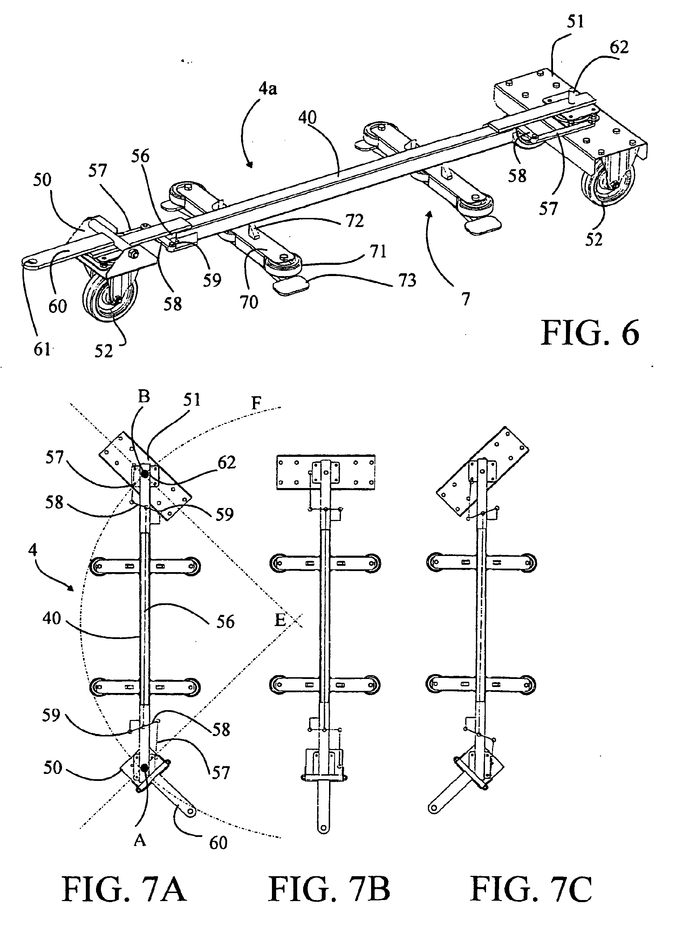

La figure 6 illustre un châssis roulant 4a dont la construction est équivalente à celle du châssis roulant 4 des figures 1 et 2, les mêmes composants portant les mêmes références. La différence réside dans la transmission mécanique constituée par un jeu de biellettes 56-58 en remplacement du câble 53 et des poulies 54. Les figures 7A à 7C permettent d'illustrer le fonctionnement de cette transmission mécanique, le châssis roulant 4a étant représenté en vues de dessus respectivement en position de virage à gauche, en ligne droite et de virage à droite. Elle comporte une biellette centrale 56 s'étendant dans l'axe du longeron 40 sur presque toute sa longueur et dont les extrémités sont chacune couplées aux essieux 50, 51 au moyen de deux autres biellettes 57, 58 articulées : une biellette transversale 58 reliée en son centre à la biellette centrale 56 et articulée à l'une de ses extrémités autour d'un point fixe 59 du longeron 40 et à l'autre extrémité à une biellette décentrée 57 articulée autour d'un point fixe de l'essieu 50, 51 correspondant, désaxé par rapport à l'axe de rotation A, B. Ainsi, lorsque le train de convoyage 1 effectue un virage à gauche (cf. fig. 7A), le timon 60 est pivoté à gauche par le véhicule tracteur 2 ou la remorque 3 précédente, entraînant l'essieu 50 du même angle de rotation, faisant reculer la biellette décentrée 57 qui pivote la biellette transversale 58 autour de son point fixe 59 et pousse la biellette centrale 56 vers l'essieu 51. Au niveau de l'essieu 51, la biellette centrale 56 pivote la biellette transversale 58 autour de son point fixe 59, situé de l'autre côté du longeron 40, poussant la biellette décentrée 57 et entraînant l'essieu 51 du même angle de rotation que le timon 60, mais en sens inverse. Les axes des roues 52 avant et arrière sont alors concourants en un point E représentant le centre de la courbe F du virage. En ligne droite (cf. fig. 7B), le timon 60 étant aligné avec le longeron 40 et la biellette centrale 56, la transmission mécanique n'a pas d'effet et les roues 52 avant et arrière sont parallèles. En virage à droite (cf. fig. 7C), la transmission mécanique est actionnée dans le sens inverse.

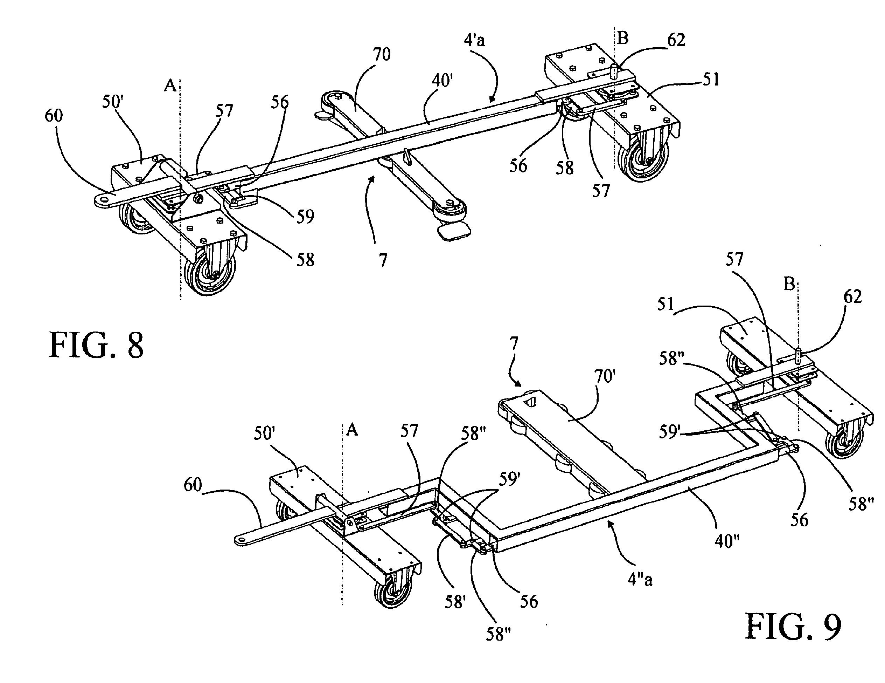

Cette transmission mécanique à biellettes peut bien entendu être transposée aux autres variantes de réalisation du châssis roulant 4'a et 4"a conformément aux figures 8 et 9 et dont la construction mécanique est similaire à celle des châssis roulants 4' et 4" des figures 4 et 5, les mêmes composants portant les mêmes références. Dans le châssis roulant 4"a de la figure 9, le jeu de biellettes est différent car il doit suivre sensiblement le trajet du longeron 40" en forme de C. A cet effet, la biellette centrale 56 est prévue dans ou sous la grande branche du C et les biellettes décentrées 57 sont sensiblement parallèles à elle et du même côté. Elles sont reliées respectivement par une biellette droite 58' articulée à deux biellettes en L 58", chacune pivotante autour d'un point fixe 59' du longeron 40".

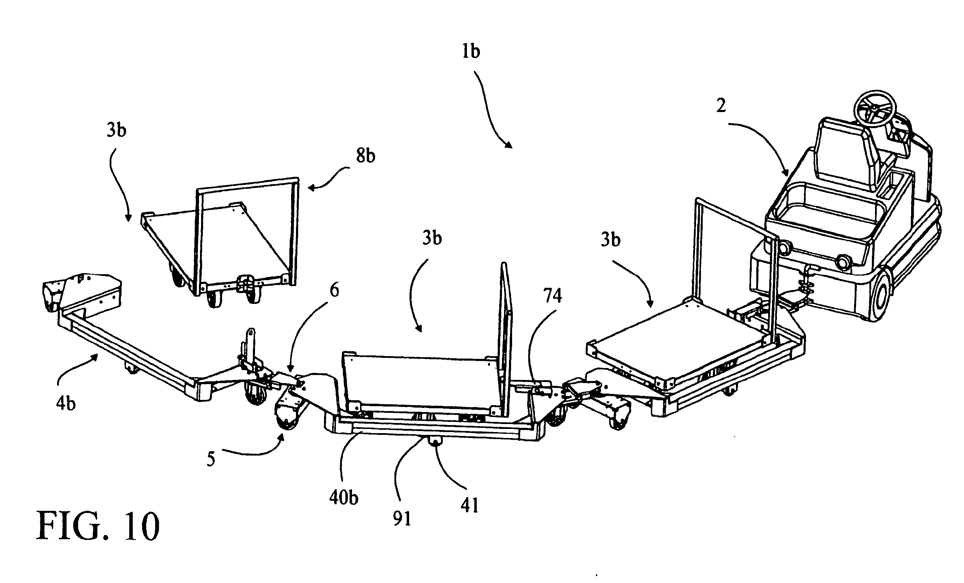

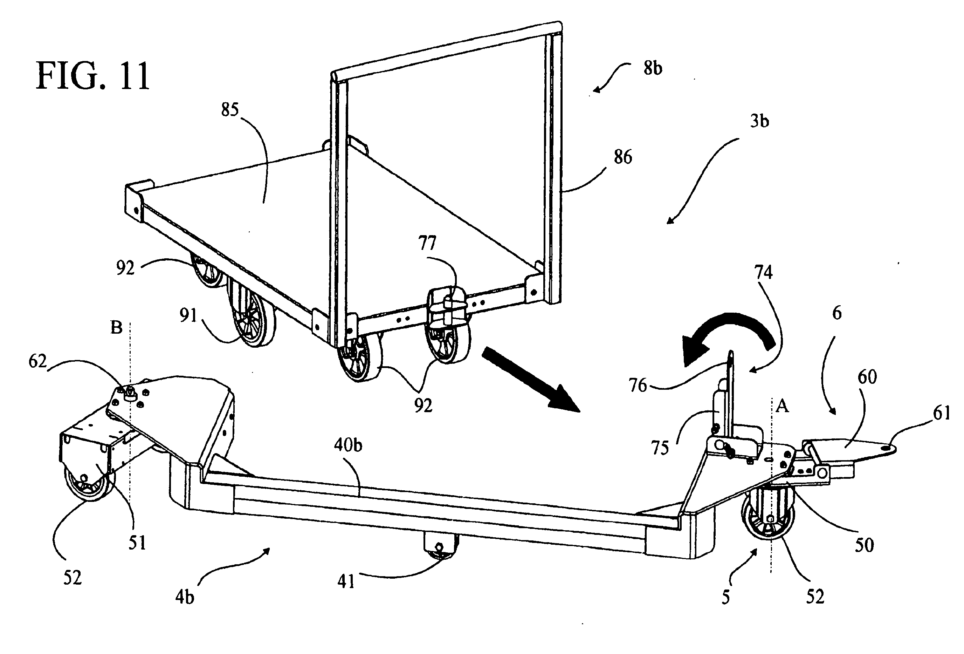

Le train de convoyage 1b de la figure 10 diffère de celui de la figure 1 en ce sens qu'il est particulièrement adapté au transport de charges lourdes, par exemple supérieures à 300 kg. Les remorques 3b sont attelées entre elles et à un véhicule tracteur 2. Chaque remorque 3b comporte, en référence également à la figure 11, un châssis roulant 4b et une structure portante 8b. Le châssis roulant 4b comporte deux essieux 50, 51 articulés autour de leur axes centraux A et B, l'essieu avant 50 étant pourvu d'une roue 52 et l'essieu arrière 51 de une ou deux roues 52. Ces essieux 50, 51 sont reliés par un longeron 40b en forme de C supporté par une roulette 41 disposée sensiblement en son milieu. Les essieux 50, 51 comportent comme dans les exemples précédents des moyens d'attelage 6, constitués par exemple d'un timon 60 et d'un pivot 62, et sont commandés en sens inverse par une transmission mécanique (non représentée) à câbles ou à biellettes passant sous le longeron 40b.

La structure portante 8b comporte un plateau 85 supporté par deux roues fixes 91 d'axe confondu, prévues dans la partie centrale, et par au moins deux roues folles 92 surélevées disposées à l'avant et à l'arrière du plateau 85. La disposition des roues fixes 91 facilite l'introduction et le dégagement de la structure portante 8b dans le châssis roulant 4b, en la faisant pivoter sur elle-même sans effort quelle que soit la charge transportée. Dans l'exemple représenté, les roues folles 92 sont doublées et sont surélevées par rapport aux roues fixes 91. Elles permettent d'équilibrer la structure portante 8b quelle que soit la charge transportée. Ces roues folles 92 sont décalées des bords du plateau 85 pour ne pas entrer en conflit avec le longeron 40b.
La structure portante 8b comporte également un organe de préhension 86 constitué d'une poignée prévue à l'avant du plateau 85 pour faciliter sa manutention.

Dans cet exemple, les moyens de couplage 7 entre le châssis roulant 4b et la structure portante 8b comportent un dispositif de verrouillage 74. Ce dispositif de verrouillage 74 comporte un levier 75 articulé prévu à l'avant du châssis 4b et pourvu d'un oeillet 76 destiné à s'emboîter sur un téton 77 prévu à l'avant de la structure portante 8b. Ce levier 75 coopère avec un dispositif à ressort permettant de bloquer sa position ouverte telle qu'illustrée à la figure 11 et sa position fermée telle qu'illustrée à la figure 10.

La forme en C du longeron 40b permet l'entrée et la sortie de la structure portante 8b du même côté. Lorsque l'on souhaite transporter une charge, on approche la structure portante 8b du châssis roulant 4b jusqu'à pouvoir verrouiller le dispositif de verrouillage 74. Lors de la mise en marche du train de convoyage 1b, la structure portante 8b se positionne d'elle-même à l'intérieur du longeron 40b. Pour ressortir la charge, on déverrouille le dispositif de verrouillage 74 et on pivote la structure portante 8b sur elle-même en la manoeuvrant par sa poignée 86. Le plateau 85 est conçu pour passer au-dessus du longeron 40b pendant cette manoeuvre.

En variante, le longeron peut être disposé au-dessus de la structure 8b, permettant de la rentrer d'un coté et de la sortir de l'autre coté, le couplage se faisant avec le même dispositif de verrouillage 74. Dans cette variante (non représentée), le longeron peut avoir une forme en C vertical aligné avec les axes de rotation A et B des essieux de manière à définir une entrée dite traversante.

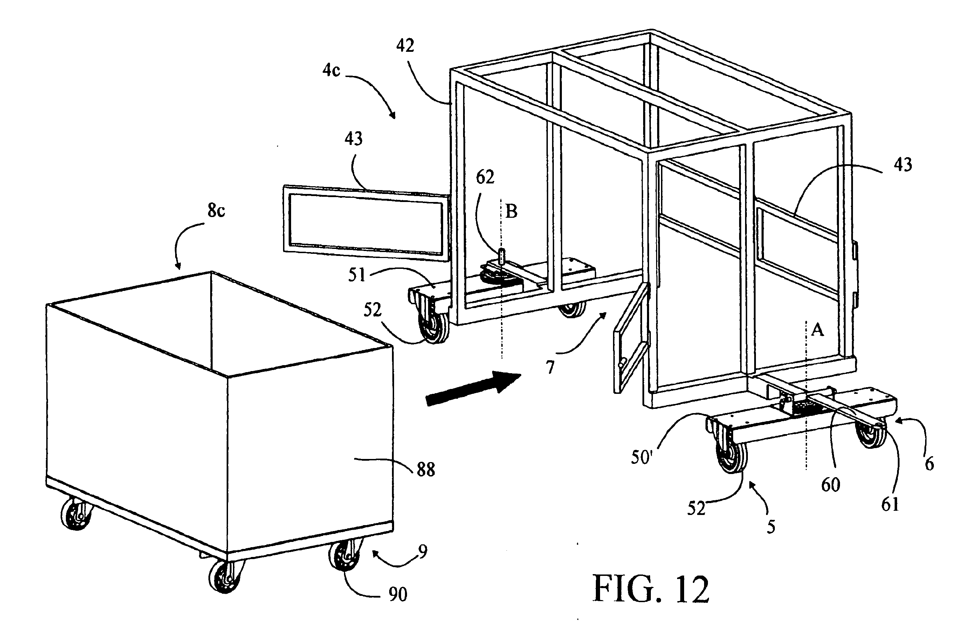

La figure 12 illustre un autre exemple de remorque 3c dans laquelle le châssis roulant 4c permet d'entrer la structure portante 8c d'un côté et de la sortir de l'autre côté. On dit qu'il définit une entrée traversante. A cet effet, le châssis roulant 4c comporte une cage 42 dont la base et les côtés latéraux sont ouverts. Des portes 43 à un ou deux battants sont prévues sur les côtés latéraux pour contrôler l'accès à cette cage 42 et guider la structure portante 8c. Les portes 43 ainsi que les parois avant et arrière de la cage 42 forment les moyens de couplage 7. Comme dans les exemples précédents, le châssis roulant 4c comporte deux essieux 50', 51 montés en rotation autour de leur axe central A, B et portant chacun deux roues 52. Ils comportent également des moyens d'attelage 6 pourvus respectivement d'un timon 60 et d'un pivot 62 et sont commandés en sens inverse par une transmission mécanique (non représentée) passant par la cage 42, par exemple une transmission à câbles. Dans cet exemple, la structure portante 8c comporte un container 88 porté par quatre roulettes folles 90, mais peut être constituée par tout autre type de structures portantes.

### Possibilités d'application industrielle :

Le fonctionnement du train de convoyage 1 selon l'invention est décrit ci-après en référence au mode de réalisation de la figure 1. On attèle à un véhicule tracteur 2 de type connu, un nombre de châssis roulants 4 en fonction du nombre de charges à transporter en un voyage. Ce nombre n'est pas limité et le choix du châssis roulant 4 dépend des structures portantes 8 à véhiculer, qui peuvent être petites ou grandes. L'opération d'attelage s'effectue simplement en insérant l'oeillet 61 du timon 60 d'un châssis roulant 4 sur l'attache du véhicule tracteur 2 ou sur un pivot 62 du châssis roulant 4 précédent. On sécurise cet attelage au moyen par exemple d'un écrou si le pivot 62 est fileté ou par tout autre moyen équivalent. Le train de convoyage 1 est prêt à circuler. Les structures portantes 8 peuvent être cherchées dans une zone de stockage, par exemple sur lesquelles sont entreposées des pièces dans des containers qu'il faut livrer à des postes de travail d'une usine de fabrication par exemple. Chaque structure portante 8 peut être déplacée aisément manuellement par l'opérateur en poussant sur le container ou sur une poignée prévue à cet effet pour l'amener en parallèle d'un châssis roulant 4, son ouverture transversale 80 étant positionnée en regard de la traverse 70 correspondante, indépendamment d'un côté
ou de l'autre du châssis roulant 4. On pousse la structure portante 8 sur le châssis roulant 4, l'ouverture transversale 80 roulant sur les galets 71 de la traverse 70. Pendant la manoeuvre, le doigt de verrouillage 72 est escamoté en position déverrouillée par le plateau inférieur 81 de la structure portante 8 jusqu'à ce qu'il soit face à l'encoche dans laquelle il se verrouille automatiquement, liant solidairement la structure portante 8 au châssis roulant 4. Lorsque le chargement du train de convoyage 1 est terminé, l'opérateur peut démarrer son véhicule tracteur 2 et circuler avec son train de convoyage 1 dans les allées de l'usine pour livrer les pièces aux différents postes de travail. A cet effet, il arrête le train de convoyage 1 aux endroits souhaités, se déplace face à la charge à livrer et appuie avec son pied sur la pédale 73 pour escamoter le doigt de verrouillage 72 et libérer la structure portante 8 voulue. Il la dégage du châssis roulant 4 en la faisant coulisser sur la traverse 70 puis la déplace jusqu'au poste de travail correspondant. Il peut faire de même pour les autres structures portantes 8 pleines et parallèlement il peut charger d'autres structures portantes 8 qui sont vides, indépendamment d'un côté ou de l'autre du train de convoyage 1. Comme expliqué précédemment, les moyens de roulement 5 des châssis roulants 4 permettent de suivre une trajectoire avec précision, sans déport, les roues 52 suivant une mono trace. Ce système de transport permet de livrer et de reprendre des charges très facilement, rapidement, sans perte de temps, dans un ordre quelconque et en toute sécurité, ce qui a pour effet d'améliorer et d'assouplir le flux des charges, de gagner du temps et de travailler en temps masqué. De plus, les remorques 3 peuvent être déclinées en différentes variantes, comme illustrées, permettant d'offrir une solution adaptée à chaque cas de figure.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Remorque (3, 3', 3b, 3c) pour train de convoyage (1, 1b) de charges, cette remorque (3, 3', 3b, 3c) comportant un châssis roulant (4, 4', 4", 4a, 4'a, 4"a, 4b, 4c) associé à au moins une structure portante (8, 8', 8b, 8c) destinée à transporter une charge, ledit châssis roulant comportant des moyens de roulement (5), des moyens d'attelage (6) destinés à atteler ladite remorque à au moins une autre remorque ou à un véhicule tracteur (2) dudit train de convoyage (1) et des moyens de couplage (7) agencés pour coupler ladite structure portante de manière amovible audit châssis roulant, cette structure portante (8, 8', 8b, 8c) comportant également des moyens de roulement (9) propres de manière à pouvoir être déplacée par rapport audit châssis roulant, **caractérisée en ce que** les moyens de roulement (5) dudit châssis roulant (4, 4', 4", 4a, 4'a, 4"a, 4b, 4c) comportent au moins trois roues (52) réparties en deux essieux (50, 50', 51) reliés entre eux par un longeron (40, 40', 40",40b, 42), lesdits moyens d'attelage (6) étant couplés auxdits essieux (50, 50', 51) et ledit longeron comportant lesdits moyens de couplage, et **en ce que** les deux essieux (50, 50', 51) sont montés mobiles en rotation autour de leur axe (A, B) central par rapport audit longeron et sont couplés entre eux par une transmission mécanique agencée pour les faire tourner en sens inverse.

2. Remorque selon la revendication 1, **caractérisée en ce que** le châssis roulant (4', 4", 4'a, 4"a) est porté par quatre roues (52), deux roues (52) par essieu (50', 51).

3. Remorque selon la revendication 1, **caractérisée en ce que** la transmission mécanique comporte au moins une poulie (54) sur chaque essieu (50, 50', 51) et au moins un câble (53) reliant les deux poulies (54, 54') en boucle fermée croisée.

4. Remorque selon la revendication 1, **caractérisée en ce que** la transmission mécanique comporte un jeu de biellettes (56-58, 58', 58") articulées.

5. Remorque selon l'une des revendications 3 ou 4, **caractérisée en ce que** la transmission mécanique comporte des moyens de réglage agencés pour ajuster le parallélisme entre les deux essieux (50, 50', 51).

6. Remorque selon la revendication 1, **caractérisée en ce que** ledit longeron (40, 40') a une forme rectiligne, est aligné avec les axes de rotation (A, B) des essieux (50, 50', 51) et agencé pour définir deux entrées disposées de part et d'autre dudit longeron pour recevoir au moins une structure portante (8, 8').

7. Remorque selon la revendication 1, **caractérisée en ce que** ledit longeron (40", 40b) a une forme de C, la grande branche du C étant décalée par rapport aux axes de rotation (A, B) desdits essieux (50, 50', 51) et agencée pour définir une seule entrée disposée du côté dégagé du longeron pour recevoir au moins une structure portante (8, 8', 8b).

8. Remorque selon l'une des revendications 6 ou 7, **caractérisée en ce que** les moyens de couplage (7) comportent au moins une traverse (70, 70') disposée sensiblement perpendiculairement audit longeron (40, 40', 40") du châssis roulant (4, 4', 4", 4a, 4'a, 4"a) et agencée pour recevoir par coulissement au moins une structure portante (8, 8'), cette structure portante comportant au moins un logement transversal (80) de section sensiblement complémentaire à celle de ladite traverse (70, 70').

9. Remorque selon la revendication 8, **caractérisée en ce que** les moyens de couplage (7) comportent deux traverses (70) disposées sensiblement parallèlement entre elles, chaque traverse (70) étant agencée pour recevoir une structure portante (8).

10. Remorque selon l'une des revendications 8 ou 9, **caractérisée en ce qu'**au moins ladite traverse (70, 70') ou ledit logement transversal (80) comporte une surface de roulement agencée pour guider la structure portante (8, 8') par rapport audit châssis roulant (4, 4', 4", 4a, 4'a, 4"a).

11. Remorque selon la revendication 10, **caractérisée en ce que** ladite traverse (70, 70') comporte au moins un galet (71) disposé de manière à former ladite surface de roulement.

12. Remorque selon la revendication 1, **caractérisée en ce que** ledit longeron a une forme en C, est aligné avec les axes de rotation (A, B) desdits essieux et agencé pour définir une entrée traversante pour recevoir au moins une structure portante.

13. Remorque selon la revendication 1, **caractérisée en ce que** ledit longeron comporte une cage (42) ouverte agencée pour définir une entrée traversante pour recevoir au moins une structure portante (8c).

14. Remorque selon l'une quelconque des revendications précédentes, **caractérisée en ce que** lesdits moyens de couplage (7) comportent des moyens de verrouillage agencés pour empêcher la sortie de ladite structure portante (8, 8', 8b, 8c) lorsqu'elle est couplée audit châssis roulant (4, 4', 4", 4a, 4'a, 4"a, 4b, 4c).

15. Remorque selon la revendication 14, **caractérisée en ce que** lesdits moyens de verrouillage comportent au moins un doigt de verrouillage (72), prévu sur au moins une traverse (70, 70') ou sur ladite structure portante (8, 8'), ce doigt de verrouillage étant mobile entre une position déverrouillée et une position verrouillée et étant couplé à au moins un organe de manoeuvre (73) agencé pour commander au moins la position déverrouillée.

16. Remorque selon la revendication 14, **caractérisée en ce que** lesdits moyens de verrouillage comportent au moins un levier (75) articulé prévu à l'avant dudit châssis roulant (4b) ou de ladite structure portante (8b), ce levier étant pourvu d'un oeillet (76) agencé pour s'emboîter sur un téton (77) prévu à l'avant de ladite structure portante (8b) ou dudit châssis roulant (4b).

17. Remorque selon la revendication 1, **caractérisée en ce que** les moyens d'attelage (6) sont choisis dans le groupe comprenant une liaison pivot (60-62), une liaison rotule, une liaison élastique.

18. Remorque selon la revendication 1, **caractérisée en ce que** les moyens de roulement (9) de ladite structure portante (8, 8', 8c) comportent au moins quatre roulettes (90) folles.

19. Remorque selon la revendication 18, **caractérisée en ce qu'**au moins une roulette (90) est couplée à un mécanisme de blocage agencé pour rendre cette roulette (90) directrice lorsque la structure portante (8, 8', 8c) est désaccouplée dudit châssis roulant.

20. Remorque selon la revendication 1, **caractérisée en ce que** les moyens de roulement (9) de ladite structure portante (8b) comportent deux roues fixes (91) d'axe confondu disposées dans la partie centrale et au moins deux roues folles (92) surélevées disposées à l'avant et à l'arrière.

21. Train de convoyage (1, 1b) comportant au moins un véhicule tracteur (2) et une série de remorques (3, 3', 3b, 3c) attelées selon l'une quelconque des revendications précédentes, lesdits châssis roulants (4, 4', 4", 4a, 4'a, 4"a, 4b, 4c) étant agencés pour rester attelés et lesdites structures portantes (8, 8', 8b, 8c) étant agencées pour être couplées aux dits châssis roulants de manière amovible.

## Claims

1. A trailer (3, 3', 3b, 3c) for a transport train (1, 1b) for loads, this trailer (3, 3', 3b, 3c) comprising a rolling chassis (4, 4', 4", 4a, 4'a, 4"a, 4b, 4c) associated with at least one load-bearing structure (8, 8', 8b, 8c) intended to transport a load, the said rolling chassis comprising rolling means (5), hitching means (6) intended to hitch the said trailer removably to at least one other trailer or to a towing vehicle (2) of the said transport train (1) and coupling means (7) designed to couple the said load-bearing structure removably to the said rolling chassis, this load-bearing structure (8, 8', 8b, 8c) also comprising rolling means (9) suitable to be able to be displaced in relation to the said rolling chassis, **characterised in that** the rolling means (5) of the said rolling chassis (4, 4', 4", 4a, 4'a, 4"a, 4b, 4c) comprise at least three wheels (52) distributed over two axles (50, 50', 51) connected to each other by a longitudinal chassis beam (40, 40', 40", 40b, 42), the said hitching means (6) being coupled to the said axles (50, 50', 51) and the said longitudinal chassis beam comprising the said coupling means, and **in that** the two axles (50, 50', 51) are mounted to rotate about their central axis (A, B) in relation to the said longitudinal beam and are coupled to each other by a mechanical transmission designed to make them turn in the opposite direction.

2. A trailer according to Claim 1, **characterised in that** the rolling chassis (4', 4", 4'a, 4"a) is borne by four wheels (52), two wheels (52) for each axle (50', 51).

3. A trailer according to Claim 1, **characterised in that** the mechanical transmission comprises at least one pulley (54) on each axle (50, 50', 51) and at least one cable (53) connecting the two pulleys (54, 54') as a crosswise closed loop.

4. A trailer according to Claim 1, **characterised in that** the mechanical transmission comprises a set of articulated connecting rods (56-58, 58', 58").

5. A trailer according to one of Claims 3 or 4, **characterised in that** the mechanical transmission comprises regulating means designed to adjust the parallelism between the two axles (50, 50', 51).

6. A trailer according to Claim 1, **characterised in that** the said longitudinal beam (40, 40') has a rectilinear shape, is aligned with the axes of rotation (A, B) of the axles (50, 50', 51) and is designed to define two openings disposed on either side of the said longitudinal beam to receive at least one load-bearing structure (8, 8').

7. A trailer according to Claim 1, **characterised in that** the said longitudinal beam (40", 40b) is C-shaped, the large branch of the C being shifted in relation to the axes of rotation (A, B) of the said axles (50, 50', 51) and designed to define a single opening disposed on the open side of the longitudinal beam to receive at least one load-bearing structure (8, 8', 8b).

8. A trailer according to one of Claims 6 or 7, **characterised in that** the coupling means (7) comprise at least one crossbeam (70, 70') disposed substantially perpendicularly to the said longitudinal beam (40, 40', 40") of the rolling chassis (4, 4', 4", 4a, 4'a, 4"a) and designed to receive by sliding at least one load-bearing structure (8, 8'), this structure comprising at last one transverse seat (80) having a section that is substantially complementary to that of the said crossbeam (70, 70').

9. A trailer according to Claim 8, **characterised in that** the coupling means (7) comprise two crossbeams (70) disposed substantially parallel to each other, each crossbeam (70) being designed to receive a load-bearing structure (8).

10. A trailer according to one of Claims 8 or 9, **characterised in that** at least the said crossbeam (70, 70') or the said transverse seat (80) comprises a rolling surface designed to guide the load-bearing structure (8, 8') in relation to the said rolling chassis (4, 4', 4", 4a, 4'a, 4"a).

11. A trailer according to Claim 10, **characterised in that** the said crossbeam (70, 70') comprises at least one roller (71) disposed so as to form the said rolling surface.

12. A trailer according to Claim 1, **characterised in that** the said longitudinal beam is C-shaped, is aligned with the axes of rotation (A, B) of the said axles and is designed to define a cross opening to receive at least one load-bearing structure.

13. A trailer according to Claim 1, **characterised in that** the said longitudinal beam comprises an open cage (42) designed to define a cross opening to receive at least one load-bearing structure (8c).

14. A trailer according to any one of the preceding Claims, **characterised in that** the said coupling means (7) comprise locking means designed to prevent the said load-bearing structure (8, 8', 8b, 8c) coming out when it is coupled to the said rolling chassis (4, 4', 4", 4a, 4'a, 4"a, 4b, 4c).

15. A trailer according to Claim 14, **characterised in that** the said locking means comprise at least one locking finger (72), provided on at least one crossbeam (70, 70') or on the said load-bearing structure (8, 8'), this locking finger moving between an unlocked position and a locked position and being coupled to at least one control mechanism (73) designed to control at least the unlocked position.

16. A trailer according to Claim 14, **characterised in that** the said locking means comprise at least one articulated lever (75) provided at the front of the said rolling chassis (4b) or the said load-bearing structure (8b), this lever being provided with a eyelet (76) designed to fit onto a lug (77) provided at the front of the said load-bearing structure (8b) or the said rolling chassis (4b).

17. A trailer according to Claim 1, **characterised in that** the hitching means (6) are chosen from the group comprising a pivot linkage (60-62), a ball linkage, and an elastic linkage.

18. A trailer according to Claim 1, **characterised in that** the rolling means (9) of the said load-bearing structure (8, 8', 8c) comprise at least four loose rollers (90).

19. A trailer according to Claim 18, **characterised in that** at least one roller (90) is coupled to a locking mechanism designed to make this a steering roller (90) when the bearing structure (8, 8', 8c) is uncoupled from the said rolling chassis.

20. A trailer according to Claim 1, **characterised in that** the rolling means (9) of the said load-bearing structure (8b) comprise two fixed wheels (91) with a shared axle disposed in the central part and at least two elevated loose wheels (92) disposed at the front and at the rear.

21. A transport train (1, 1b) comprising at least one towing vehicle (2) and a series of hitched trailers (3, 3', 3b, 3c) according to one of the preceding Claims, the said rolling chassis (4, 4', 4", 4a, 4'a, 4"a, 4b, 4c) being designed to remain hitched and the said load-bearing structures (8, 8', 8b, 8c) being designed to be movably coupled to the said rolling chassis.

## Patentansprüche

1. Anhänger (3,3',3b,3c) für einen Transportzug (1,1b) von Lasten, wobei der Anhänger (3,3',3b,3c) einen Rollrahmen (4,4',4",4a,4'a,4"a,4b,4c) umfasst, der mit mindestens einer Tragkonstruktion (8,8',8b,8c) verbunden ist, die zum Transportieren einer Last bestimmt ist, wobei der Rollrahmen Rolleinrichtungen (5) und Kupplungseinrichtungen (6), die zum Kuppeln des Anhängers an mindestens einen anderen Anhänger oder an ein Zugfahrzeug (2) des Transportzuges (1) vorgesehen ist, sowie Kupplungseinrichtungen (7) umfasst, die zum lösbaren Kuppeln der Tragkonstruktion mit dem Rollrahmen angeordnet sind, wobei die Tragkonstruktion (8,8',8b,8c) außerdem eigene Rolleinrichtungen (9) umfasst, damit sie im Verhältnis zu dem Rollrahmen verlagerbar ist, **dadurch gekennzeichnet, dass** die Rolleinrichtungen (5) des Rollrahmens (4,4',4",4a,4'a,4"a,4b,4c) mindestens drei Räder (52) aufweisen, die auf zwei Achsen (50,50',51) verteilt sind, die untereinander mittels eines Längsträgers (40,40',40",40b,42) verbunden sind, wobei die Kupplungseinrichtungen (6) mit den Achsen (50,50',51) verbunden sind, wobei der Längsträger die Kupplungseinrichtungen umfasst, und wobei die zwei Achsen (50,50',51) im Verhältnis zu dem Längsträger um ihre Mittelachse (A,B) mittels einer mechanischen Übertragung drehbeweglich sind, die angeordnet ist, um sie in der umgekehrten Richtung beweglich zu gestalten.

2. Anhänger nach Anspruch 1, **dadurch gekennzeichnet, dass** der Rollrahmen (4',4",4'a,4"a) von vier Rädern (52), d. h. zwei Rädern (52) pro Achse (50',51), getragen wird.

3. Anhänger nach Anspruch 1, **dadurch gekennzeichnet, dass** die mechanische Übertragung mindestens eine Seilrolle (54) auf jeder Achse (50,50',51) und mindestens ein Kabel (53) umfasst, welches die zwei Seilrollen (54,54') in Form einer gekreuzten Endlosschleife verbindet.

4. Anhänger nach Anspruch 1, **dadurch gekennzeichnet, dass** die mechanische Übertragung einen Satz Anlenkstangen (56-58,58',58") umfasst.

5. Anhänger nach einem der Ansprüche 3 oder 4, **dadurch gekennzeichnet, dass** die mechanische Übertragung Regelungseinrichtungen zur Einstellung der Parallelität zwischen den zwei Achsen (50,50',51) umfasst.

6. Anhänger nach Anspruch 1, **dadurch gekennzeichnet, dass** der Längsträger (40,40') eine geradlinige Form aufweist, mit den Drehachsen (A,B) der Achsen (50,50',51) ausgerichtet und angeordnet ist, um zwei Eingänge festzulegen, die beiderseits des Längsträgers festgelegt sind, um mindestens eine Tragkonstruktion (8,8') aufzunehmen.

7. Anhänger nach Anspruch 1, **dadurch gekennzeichnet, dass** der Längsträger (40",40b) eine C-Form aufweist, wobei der große Schenkel des C im Verhältnis zu den Drehachsen (A,B) der Achsen (50,50',51) versetzt und angeordnet ist, um einen einzigen Eingang festzulegen, der an der von dem Längsträger losgelösten Seite angeordnet ist, um mindestens eine Tragkonstruktion (8,8',8b) aufzunehmen.

8. Anhänger nach Anspruch 6 oder 7, **dadurch gekennzeichnet, dass** die Kupplungseinrichtungen (7) mindestens eine praktisch senkrecht zu dem Längsträger (40,40',40") des Rollrahmens (4,4',4",4a,4'a,4"a) angeordnete Traverse (70,70') umfassen, die angeordnet ist, um durch Gleiten mindestens eine Tragkonstruktion (8,8') aufzunehmen, wobei die Tragkonstruktion mindestens eine Queraufnahme (80) mit einem Querschnitt umfasst, der praktisch zu demjenigen der Traverse (70,70') ergänzend ist.

9. Anhänger nach Anspruch 8, **dadurch gekennzeichnet, dass** die Kupplungseinrichtungen (7) zwei praktisch parallel zueinander angeordnete Traversen (70) umfassen, wobei jede Traverse (70) angeordnet ist, um eine Tragkonstruktion (8) aufzunehmen.

10. Anhänger nach einem der Ansprüche 8 oder 9, **dadurch gekennzeichnet, dass** mindestens die Traverse (70,70') oder die Queraufnahme (80) eine Rolloberfläche aufweist, die angeordnet ist, um die Tragkonstruktion (8,8') im Verhältnis zu dem Rollrahmen (4,4',4",4a,4'a,4"a) zu führen.

11. Anhänger nach Anspruch 10, **dadurch gekennzeichnet, dass** die Traverse (70,70') mindestens eine Zapfenrolle (71) umfasst, die angeordnet ist, um die Rolloberfläche auszubilden.

12. Anhänger nach Anspruch 1, **dadurch gekennzeichnet, dass** der Längsträger eine C-Form aufweist, mit den Drehachsen (A,B) der Achsen ausgerichtet und angeordnet ist, um einen hindurchgehenden Eingang zur Aufnahme mindestens einer Tragkonstruktion auszubilden.

13. Anhänger nach Anspruch 1, **dadurch gekennzeichnet, dass** der Längsträger einen offenen Käfig (42) umfasst, der angeordnet ist, um einen hindurchgehenden Eingang zur Aufnahme mindestens einer Tragkonstruktion (8c) auszubilden.

14. Anhänger nach einem der vorangegangenen Ansprüche, **dadurch gekennzeichnet, dass** die Kupplungseinrichtungen (7) Verriegelungseinrichtungen umfassen, die angeordnet sind, um den Austritt der Tragkonstruktion (8,8',8b,8c) zu verhindern, wenn sie mit dem Rollrahmen (4,4',4",4a,4'a,4"a,4b,4c) verbunden ist.

15. Anhänger nach Anspruch 14, **dadurch gekennzeichnet, dass** die Verriegelungseinrichtungen mindestens einen Verriegelungsfinger (72) umfassen, der auf mindestens einer Traverse (70,70') oder auf der Tragkonstruktion (8,8') vorgesehen ist, wobei der Verriegelungsfinger zwischen einer Entriegelungsposition und einer Verriegelungsposition bewegbar und mit mindestens einem Handhabungselement (73) verbunden ist, um mindestens die Entriegelungsposition zu steuern.

16. Anhänger nach Anspruch 14, **dadurch gekennzeichnet, dass** die Verriegelungseinrichtungen mindestens einen gelenkig gelagerten Hebel (75) umfassen, der im Vorderteil des Rollrahmens (4b) oder der Tragkonstruktion (8b) vorgesehen ist, wobei der Hebel mit einer Öse (76) versehen ist, die angeordnet ist, um sich auf einem Ansatz (77) aufzustecken, der im Vorderteil der Tragkonstruktion (8b) oder des Rollrahmens (4b) vorgesehen ist.

17. Anhänger nach Anspruch 1, **dadurch gekennzeichnet, dass** die Kupplungseinrichtungen (6) aus der Gruppe ausgewählt sind, die eine Drehverbindung (60-62), eine Kugelgelenkverbindung und eine elastische Verbindung umfassen.

18. Anhänger nach Anspruch 1, **dadurch gekennzeichnet, dass** die Rolleinrichtungen (9) der Tragkonstruktion (8,8',8c) mindestens vier Schwenkrollen (90) umfassen.

19. Anhänger nach Anspruch 18, **dadurch gekennzeichnet, dass** mindestens eine Rolle (90) mit einem Arretierungsmechanismus verbunden ist, um die Rolle (90) führend zu gestalten, wenn die Tragkonstruktion (8,8',8c) von dem Rollrahmen getrennt wird.

20. Anhänger nach Anspruch 1, **dadurch gekennzeichnet, dass** die Rolleinrichtungen (9) der Tragkonstruktion (8b) zwei feststehende Räder (91) mit zusammenfallender Achse, die in dem Mittelteil angeordnet sind, und mindestens zwei erhöhte bewegliche Räder (92) umfassen, die vorne und hinten angeordnet sind.

21. Transportzug (1,1b), der mindestens ein Zugfahrzeug (2) und eine Reihe von Anhängern (3,3',3b,3c) umfasst, die nach einem der vorangegangenen Ansprüche gekuppelt sind, wobei die Rollrahmen (4,4',4",4a,4'a,4"a,4b,4c) angeordnet sind, um verbunden zu bleiben, und die Tragkonstruktionen (8,8',8b,8c) angeordnet sind, um mit den Rollrahmen lösbar verbunden zu bleiben.
